# EUROPÄISCHE PATENTSCHRIFT

(11) **EP 1 936 143 B1**
(45) Veröffentlichungstag und Bekanntmachung des Hinweises auf die Patenterteilung: **21.01.2015**
(21) Anmeldenummer: 08004903.4
(22) Anmeldetag: 29.03.2001
(51) Int. Cl.: F02B 19/10, H01T 13/54

(54) **Vorkammer-Zuendkerze mit Zusatzstoff zur Entflammung sehr magerer Kraftstoff-Luft-Gemische, insbesondere für Gasmotoren**
Pre-chamber ignition plug with additive for igniting very weak fuel-air mixes, particularly for gas motors
Bougies d'allumage à préchambre dotées d'additifs destinés à la combustion de mélanges carburant-air très maigres, en particulier pour des moteurs à gaz

(30) Priorität: 03.04.2000 DE 10016558
(43) Veröffentlichungstag der Anmeldung: 25.06.2008
(62) Teilanmeldung aus: 01107968.8
(73) Patentinhaber: Kuhnert, Dieter, Dr., D-74889 Sinsheim (DE)
(72) Erfinder: Kuhnert, Dieter, Dr., 74889 Sinsheim (DE); Latsch, Reinhard, Dr.-Ing., 76530 Baden-Baden (DE)
(74) Vertreter: Ullrich & Naumann

(56) Entgegenhaltungen:
- DE-A- 2 743 495
- DE-A- 3 300 945
- DE-A- 19 819 197
- US-A- 4 091 772
- US-A- 4 338 897
- US-A- 4 892 070
- DATABASE EPODOC EUROPEAN PATENT OFFICE, THE HAGUE, NL; XP002194034 & KR 9 612 347 B (HYUNDAI MOTOR CO LTD) 18. September 1996 (1996-09-18)

## Beschreibung

Die Erfindung betrifft ein Verfahren zur Entflammung sehr magerer Kraftstoff-Luft-Gemische mit einer am Rande eines Hauptbrennraums einer Brennkraftmaschine angeordneten fremdgezündeten Vorkammer-Zündkerze, die über Überströmkanäle mit dem Hauptbrennraum verbunden ist, wobei eine geringe Menge Zusatzkraftstoff ventilgesteuert in die Vorkammer eingebracht wird. Die Erfindung betrifft weiterhin eine zur Durchführung des Verfahrens geeignete Anordnung, insbesondere für die Anwendung bei Gasmotoren mit einer eine Zündstrecke umgebenden Vorkammer, die zum Hauptbrennraum führende, vorzugsweise tangential verlaufende Überströmkanäle aufweist, und mit einem Zusatzkraftstoff zuführenden, extrem dünnen Versorgungskanal, über den insbesondere mit einem Magnetventil zeitgesteuert unter hohem Druck stehender Kraftstoff insbesondere während des Verdichtungstaktes der Brennkraftmaschine zugemessen wird. Ein weiteres Beispiel ist in dem Dokument US-4091772 gezeigt.

Zum Zünden von mit Luft und/oder Abgas verdünnten bzw. abgemagerten Kraftstoff-Luft-Gemischen in Brennkraftmaschinen ist es bekannt, eine fremdgezündete Vorkammer-Zündeinrichtung zu verwenden, bei der über vorzugsweise tangential verlaufende Überströmkanäle Gemisch aus dem Hauptbrennraum in die Vorkammer während des Kompressionstaktes eingedrückt wird, wobei fettes Kraftstoff-Luft-Zusatzgemisch oder Zusatzkraftstoff ventilgesteuert über einen Versorgungskanal in Form einer sogenannten Schichtladung in die Vorkammer eingebracht wird (DE-OS 24 50 980). Weiterhin ist bekannt, dass ein fettes Kraftstoff-Luft-Zusatzgemisch oder Zusatzkraftstoff ventilgesteuert über einen Versorgungskanal in den Bereich mindestens eines Überströmkanals ausserhalb der Vorkammer gelenkt wird. Dabei ergibt sich während des Kompressionstaktes in der Vorkammer eine Vermischung zwischen dem Hauptgemisch aus dem Brennraum und dem Zusatzgemisch bzw. Zusatzkraftstoff, die beide in die Vorkammer eingedrückt und dort vermischt werden (DE-OS 37 09 976).

Nachteilig an den bekannten Verfahren ist die hohe thermische Belastung der Ventile, weil in der unmittelbarer Nähe der Vorkammer (DE-OS 24 50 980) bzw. im vorderen Bereich der Vorkammer und in Brennraumnähe (Fig.3 und Fig. 10 von DE-OS 37 09 976) sehr hohe Temperaturen auftreten. Zudem ergeben sich bei grösseren Zufuhrkanalquerschnitten für das Zusatzgemisch bzw. den Zusatzkraftstoff auch bei zurückgezogenem Zumessventil (Fig. 1 von DE-OS 37 09 976) - insbesondere bei Zumischung von Zusatzgemisch - hohe thermische Belastungen für das Zumessventil und den Zufuhrkanal, da die Wärmeabfuhr bzw. Kühlung gering ist. Zusätzlich ergibt sich eine hohe mechanische Belastung des teilweise frei geführten Zufuhrkanals.

Ein weiterer Nachteil von DE-OS 37 09 976 besteht darin, dass die Zumischung des in die Vorkammer geführten Zusatzgemischs bzw. Zusatzkraftstoffs ausserhalb der Vorkammer erfolgt. Nachteilig ist weiterhin, dass die Zufuhr aus Kostengründen nur vor einem Überströmkanal durchgeführt wird. Die unsymmetrische Zufuhr vor der Vorkammer führt zu Inhomogenitäten in der Vorkammer und damit zu einer schwankenden Entflammung in der Vorkammer, d.h. zu schwankenden Energieumsetzungen im Hauptbrennraum. Nachteilig ist weiterhin, dass die Menge des benötigten Zusatzgemischs bzw. Zusatzkraftstoffs vergleichsweise groß ist, da die gesamte Kammer und teilweise auch der Bereich vor der Kammer mit Kraftstoff bzw. fettem Gemisch angereichert werden muss, um mit Sicherheit im Bereich einer Funkenstrecke in der Vorkammer gute Entflammungsbedingungen zu erhalten.

Die Aufgabe der Erfindung besteht daher darin, ein Verfahren der Eingangs genannten Gattung aufzuzeigen und eine zur Durchführung des Verfahrens geeignete Anordnung zu schaffen, durch die es möglich ist, durch Zuführung einer minimalen Kraftstoffmenge eine sichere Eritflammung des Gemischs in der Vorkammer und eine sichere, gleichmässige und schnelle Energieumsetzung für das sehr magere Gemisch im Hauptbrennraum bei dem Verbrennungsverfahren und damit niedrige NOx-Emission zu erzielen. Gleichzeitig soll dabei die Temperatur eines zur Zumessung verwendeten Ventils besonders niedrig gehalten werden.

Diese Aufgabe wird erfindungsgemäss durch ein Verfahren gelöst, bei dem nur eine minimale Menge, vorzugsweise << 1 mg pro Arbeitsspiel der Brennkraftmaschine an Zusatzkraftstoff über einen langen und dünnen, kapillarähnlichen Zuführkanal bei großem Abstand zwischen Vorkammer und Zumessstelle zugeführt wird, wodurch die thermische Belastung des insbesondere durch ein Elektromagneten betätigten Ventils gering bleibt.

Um bestmögliche Entflammung des angereicherten Gemischs an der Zündstelle zu gewährleisten ist bei dem Verfahren die Regelung der Gemischzusammensetzung an der Zündstelle mit Auswertung des an der Zündkerze gemessenen lonenstromverlaufs vorgesehen (siehe auch DE-OS 19819 197).

Weiterhin wird die Aufgabe durch eine im wesentlichen zylindrischen Zündkammer gelöst, bei der die Zumischung insbesondere aus radialer Richtung im mittleren Bereich der Vorkammer erfolgt.

Nach Zuführung des Zusatzkraftstoffes in die Vorkammer wird dieser Kraftstoff während des Verdichtungstaktes der Brennkraftmaschine intensiv mit dem aus dem Brennraum über die Überströmkanäle in die Zündkammer gelangenden besonders kraftstoffarmen Gemisch durch die durch die Überstömkanäle bewirkte hohe Ladungsbewegung vermischt und in Form einer Pfropfenströmung in den oberen Teil der Vorkammer transportiert, wobei durch die Verwirbelung bis zu den dort befindlichen Zündelektroden eine von Arbeitszylus zu Arbeitszyklus gleichmässig gute Vermischung im Bereich der Zündelektroden erreicht wird.

Als Folge der Zündung und nachfolgenden Verbrennung in der Vorkammer kommt es zu einem Druck- und Temperaturanstieg und infolge dessen durch die Überströmkanäle im Hauptbrennraum Zündfackeln austreten, die für eine sichere und gleichmässige Zündung des dortigen extrem abgemagerten Kraftstoff-Luft-Gemischs sorgen.

Bei Verwendung eines gasförmigen Zusatzkraftstoffs ergibt sich in dem dünnen Versorgungskanal eine Rückverdichtung des Gases, wobei es aber wegen des sehr kleinen Querschnitts zu keiner nennenswerten Längsvermischung zwischen heißen verbrannten Gasen und dem gasförmigen Kraftstoff kommt, d.h., es können keine heissen Gase in den Bereich eines am Ende des Versorgungskanals angeordneten Zumessventils gelangen, so dass die thermische Belastung des Zumessventils gering bleibt.

Durch die in den Unteransprüchen aufgeführten Massnahmen sind vorteilhafte Weiterbildungen und Verbesserungen des im 1. Anspruch angegebenen Verfahrens möglich.

Damit die Herstellung des Versorgungskanals vereinfacht wird, befindet sich dieser in einem geraden Versorgungskanalträger. Um eine Berührung mit dem Kühlwassersystem der Brennkraftmaschine zu vermeiden und die Fertigung zu vereinfachen ist es sinnvoll, den Versorgungskanalträger im wesentlichen parallel zur Unterseite des Zylinderkopfs anzuordnen, wobei das Zumessventil seitlich am Zylinderkopf eingeschraubt wird.

Als Ventil zur Zumessung des Zusatzkraftstoffs eignet sich insbesondere ein elektromagnetisch gesteuertes Ventil, wie es z.B. zur Hochdruck-Direkteinspritzung bei Brennkraftmaschinen verwendet wird. Zur Erhöhung der Funktionssicherheit und der Zumessgenauigkeit kann zwischen dem Zumessventil und der Austrittsöffnung des Versorgungskanals noch ein Rückschlagventil angeordnet sein.

Durch einen Ringkanal mit insbesondere mehreren radial zur Achse der Vorkammer ausgerichteten Zulaufbohrungen im Bereich des Zündkerzengewindes wird sichergestellt, dass bei der Zuführung des Zusatzkraftstoffs ein ungehinderter radialer Zugang des Zusatzkraftstoffs gesichert ist. Dabei ergibt sich eine besonders vorteilhafte Zumischung im äußeren Bereich des von unten nach oben in der Vorkammer aufsteigenden Gemischwirbels.

Zur Verbesserung der Kühlung des dünnen Versorgungskanals für den Zusatzkraftstoff kann die Kühlwasserführung im Zylinderkopf so modifiziert werden, dass sich eine ausreichende Wärmeabfuhr ergibt.

Ein Ausführungsbeispiel der Erfindung ist in Zeichnungen dargestellt und in der nachfolgenden Beschreibung naher erläutert. Es zeigen:
Fig. 1 das Ausführungsbeispiel mit Vorkammer-Zündkerze, Versorgungskanal und Zumessventil,
Fig. 2 die zweckmässigerweise als Einheit ausgebildete Anordnung von Versorgungskanalträger und Zumessventil,
Fig. 3 die einschraubbare Vorkammer-Zündkerze mit vorderem Teil des Versorgungskanalträgers sowie
Fig. 4 einen Schnitt durch den vorderen Teil der Vorkammer, die als Wirbelkammer mit tangentialen Überströmkanälen und zentralem Kanal ausgebildet ist.

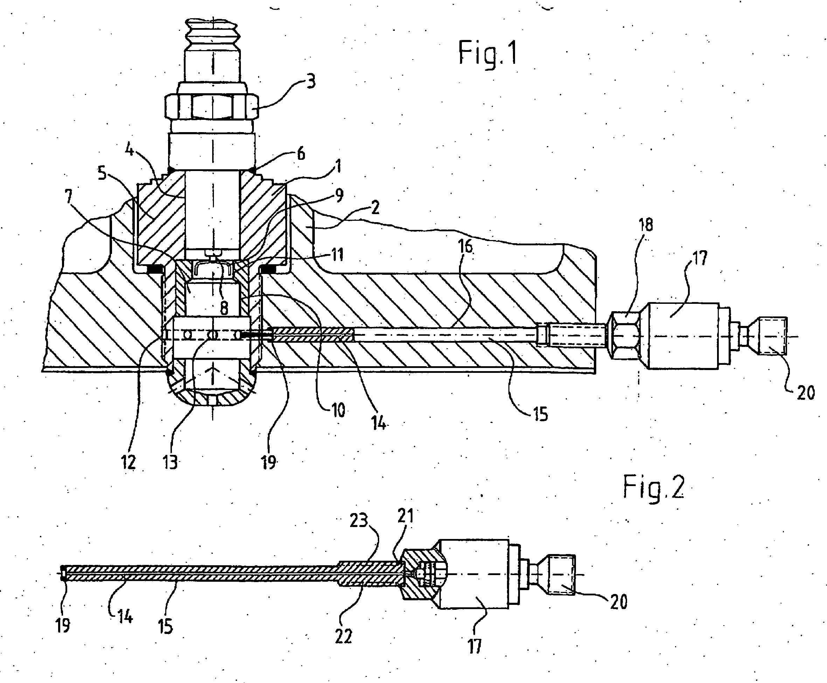

Die in Fig. 1 als Ausführungsbeispiel dargestellte Zündkerze mit Vorkammer (1) ist üblicherweise in einen Zylinderkopf (2) eingeschraubt, wobei zum Ein- und Ausschrauben mit einem Schraubenschlüssel z.B. ein Sechskant (3) verwendet wird. Zur Herstellung der Vorkammer-Zündkerze (1) kann insbesondere eine übliche Zündkerze modifiziert werden, in dem z.B. das übliche Einschraubgewinde durch Bearbeitung in eine zylindrische Form (4) gebracht wird und mit dem Grundträger der Vorkammer (7) durch die Schweissnaht (6) verschweißt wird. An der in die Vorkammer (7) hineinragenden Zentralelektrode der Zündkerze (8) sind wie bekannt mehrere Einzelelektroden (9) angeordnet, die mit der temperaturfesten, im wesentlichen zylindrischen Wand (10) der Vorkammer mehrere Funkenstrecken bilden (11).

Um eine sichere Versorgung der Vorkammer mit Zusatzkraftstoff in allen Einschraubpositionen bzw. Drehwinkelpositionen der Vorkammer-Zündkerze zu gewährleisten, enthält diese im Gewindebereich einen Ringkanal (12) mit insbesondere mehreren radial in die Vorkammer gerichteten Zulaufbohrungen (13). Der kapillarähnliche Versorgungskanal (14) befindet sich in einem Versorgungskanalträger (15), der zweckmässig im wesentlichen parallel zur Zylinderkopfoberfläche in einer Bohrung (16) angeordnet ist, wobei der Träger (15) beispielhaft mit dem Zumessventil (17) verbunden ist. Durch Einschrauben der Einheit aus Versorgungskanalträger (15) und Zumessventil (17) wird bei Verwendung eines Sechskants (18) und einer Dichtung (19) auf der Stirnseite des Versorgungskanalträgers (15) der Versorgungskanal im vorderen Bereich abgedichtet.

Fig. 2 zeigt die integrierte Einheit aus Versorgungskanalträger (15) und Zumessventil (17) mit dem daran befestigtem Kraftstoffanschluß (20). Der Versorgungskanal (14) im Versorgungskanalträger ist vorzugsweise kreisförmig und besitzt dabei einen Durchmesser von < 0,8 mm, vorzugsweise 0,1 - 0,3 mm.

Die Herstellung erfolgt nach bekannten Verfahren zur Herstellung von Metallkapillaren z.B., indem man zwei halbkreisförmige Einzelteile auf ihrer flachen Seite im mittleren Bereich mit einer halbkreisförmigen Längsnut versieht und nachfolgend beide Teile durch Löten oder Schweißen so miteinander verbindet, dass die halbkreisförmigen Längsnuten angepasst aufeinander liegen. Eine weitere Möglichkeit zur Herstellung besteht darin, dass man ein Rohr mit vergleichsweise großem Innendurchmesser nach Einlegen eines Drahtes in die innere Öffnung des Rohres so lange durch Walzen o.ä. verformt, bis die Bohrung allseitig am Draht anliegt. In einem weiteren Arbeitsschritt wird der Draht aus dem Rohr entfernt.

Die Befestigung des Versorgungskanalträgers (15) am Zumessventil (17) kann z.B. über eine Verschweissung (21) erfolgen, die eine zylindrische Verstärkung (22) im hinteren Teil des Versorgungskanalträgers (15) mit dem Zumessventil (17) verbindet. Auf der Verstärkung (22) ist dabei das Einschraubgewinde (23) der gemeinsamen Einheit aus Versorgungskanalträgers (15) und Zumessventil (17) aufgebracht.

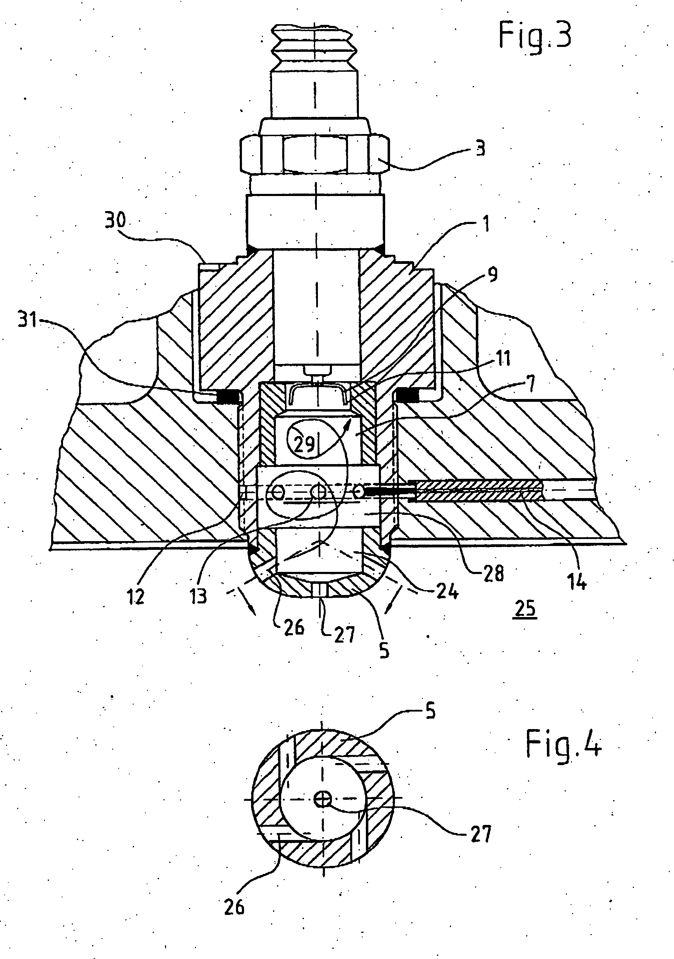

In Fig. 3 sind weitere beispielhafte Einzelheiten zur Vorkammer-Zündkerze für die Entflammung sehr magerer Kraftstoff-Luft-Gemische dargestellt. Danach weist das Vorkammergehäuse (5) im unteren Bereich (24) schräg nach unten zum Hauptbrennraum (25), insbesondere tangential in die Vorkammer (7) einmündende Überströmkanäle (26) sowie einen zusätzlichen axial nach unten verlaufenden Überströmkanal (27) auf. Das Vorkammergehäuse (5) besitzt zweckmässig im mittleren Bereich einen erweiterten Innendurchmesser (28). Hierdurch ergeben sich einerseits kürzere und damit strömungverlustarme Zuströmbohrungen (13) für den Zuatzkraftstoff und andererseits besonders vorteilhafte Strömungsverhältnisse für eine gute Durchmischung zwischen dem in der Vorkammer schraubenförmig aufsteigenden Strom (29) mageren Gemischs aus dem Hauptbrennraum und dem Zusatzkraftstoff aus dem Versorgungskanal.

Wie schon erwähnt, befinden sich am Umfang der im Gewindebereich der Vorkammer-Zündkerze angeordneten Ringnut (12) eine größere Anzahl von im wesentlichen im gleichen Winkelabstand angeordneten Zulaufbohrungen (13). Um im besonderen Fall eine ungehinderte Strömung des Zusatzkraftstoffes aus dem Versorgungskanal (14) zu erreichen, besitzt die Zündkerze auf der oberen Seite für den Einschraubenden deutlich sichtbare Markierungen (30), die der Winkelrichtung der Zulaufbohrungen (13) entsprechen.

In Verbindung mit einer sichtbaren Markierung auf dem Zylinderkopf ist es damit möglich; die Vorkammer-Zündkerze bei Einhaltung eines vorgeschriebenen Anzugsmomentes soweit einzuschrauben, dass eine der Markierungen auf der Vorkammer-Zündkerze mit der Markierung am Zylinderkopf zur Deckung kommt. Damit wird erreicht, dass der Versorgungskanal (14) gegenüber der Zulaufbohrung (13) positioniert ist und somit Zusatzkraftstoff ungehindert und ohne Umlenkungen in die Vorkammer (7) einströmen kann.

Fig. 4 zeigt dazu die schräg nach unten zum Hauptbrennraum (25) verlaufenden, tangential in die Vorkammer (7) einmündenden Überströmkanäle (26) sowie den zusätzlichen axial nach unten verlaufenden Überströmkanal (27) in Form eines Schnitts durch den vorderen Teil der Vorkammer-Zündkerze (1).

## Patentansprüche

1. Verfahren zur Entflammung sehr magerer Kraftstoff-Luft-Gemische mittels einer im Hauptbrennraum einer Brennkraftmaschine angeordneten fremdgezündeten Vorkammer-Zündeinrichtung, die über vorzugsweise tangential verlaufende Überströmkanäle mit dem Hauptbrennraum verbunden ist, wobei Zusatzkraftstoff ventilgesteuert in die Vorkammer eingebracht wird,
wobei der Zusatzkraftstoff gasförmig ist und wobei die Zufuhr des Zusatzkraftstoffs über einen dünnen kapillarähnlichen Versorgungskanal (14) bei Zumessung mit einem Zumessventil (17) erfolgt, das sich in einem größeren Abstand zur Zündkammer befindet,
**dadurch gekennzeichnet, dass** die Länge des In einem Versorgungskanalträger (15) angeordneten Versorgungskanals (14) L zum Durchmesser des Versorgungskanals (14) D, d.h. L/D > 100 ist.

2. Verfahren nach Anspruch 1, **dadurch gekennzeichnet, dass** die Zumessung des Kraftstoffs durch ein zeitgesteuertes, vorzugsweise mit einem durch einen Elektromagneten betätigtes Ventil erfolgt.

3. Verfahren nach Anspruch 1, **dadurch gekennzeichnet, dass** die Länge des In einem Versorgungskanalträger (15) angeordneten Versorgungskanals (14) L zum Durchmesser des Versorgungskanals (14) D, d.h. L/D > 300 ist.

4. Verfahren nach einem der vorstehenden Ansprüche, **dadurch gekennzeichnet, dass** der Versorgungskanalträger (15) im Wesentlichen quer zur Hauptachse der im Wesentlichen zylindrischen Vorkammer (7) angeordnet ist.

5. Verfahren nach einem der vorstehenden Ansprüche, **dadurch gekennzeichnet, dass** die Zumessung des Zusatzkraftstoffs während der Verdichtungsphase der Brennkraftmaschine erfolgt.

6. Verfahren nach Anspruch 5, **dadurch gekennzeichnet, dass** eine Regelung der Gemischzusammensetzung an der Zündstelle mit Auswertung des an der Zündkerze gemessenen lonenstromverlaufs erfolgt.

7. Vorkammer-Zündkerze zur Entflammung sehr magerer Kraftstoff-Luft-Gemische, insbesondere von Gasmotoren, mit einer eine Zündstrecke umgebenden Vorkammer, die zum Hauptbrennraum führende Überströmkanäle aufweist,
wobei mindestens in einem Bereich der Vorkammer (7) wenigstens eine Zulaufbohrung (13) für gasförmigen Zusatzkraftstoff angeordnet ist, wobei die Zufuhr des Zusatzkraftstoffs über einen dünnen kapillarähnlichen Versorgungskanal (14) bei Zumessung mit einem Zumessventil (17) erfolgt, das sich in einem größeren Abstand zur Zündkammer befindet,
**dadurch gekennzeichnet, dass** die Länge des in einem Versorgungskanalträger (15) angeordneten Versorgungskanals (14) L zum Durchmesser des Versorgungskanals (14) D, d.h. L/D > 100 ist.

8. Vorkammer-Zündkerze nach Anspruch 7, **dadurch gekennzeichnet, dass** mindestens eine Zulaufbohrung (13) sich im Bereich des Zündkerzengewindes befindet.

9. Vorkammer-Zündkerze nach Anspruch 7 oder 8, **dadurch gekennzeichnet, dass** diese im Außenbereich des Gewindes mindestens einen Ringkanal (12) enthält, der mit dem Versorgungskanal (14) und mit der Vorkammer (7) in Verbindung steht.

10. Vorkammer-Zündkerze nach Anspruch 7 bis 9, **dadurch gekennzeichnet, dass** sich am Außenumfang des Ringkanals (12) mehrere Zulaufbohrungen (13) befinden.

11. Vorkammer-Zündkerze nach einem der vorstehenden Ansprüche, **dadurch gekennzeichnet, dass** sich auf der Oberseite der Zündkerze (1) insbesondere mehrere sichtbare Markierungen (30) befinden, wobei mit den Markierungen eine Zuordnung zu den Zugangsbohrungen (13) verbunden ist und mit den Markierungen beim Einschrauben der Zündkerze sichergestellt werden kann, dass mindestens eine der Zugangsbohrungen (13) fluchtend zum Versorgungskanal (14) für den Zusatzkraftstoff orientiert ist.

12. Vorkammer-Zündkerze nach Anspruch 11, **dadurch gekennzeichnet, dass** durch Verdrehung der Zündkerze mit dem Sechskantsteckanschluss (3) eine elastische Dichtung (31) so weit verformt wird, dass eine einzustellende Orientierung der Zugangsbohrungen (13) sicher erreicht wird.

13. Vorkammer-Zündkerze nach einem der vorstehenden Ansprüche, **dadurch gekennzeichnet, dass** diese zur Entflammung sehr magerer Kraftstoff-Luft-Gemische, insbesondere von Gasmotoren, dient.

## Claims

1. Method for igniting very weak fuel/air admixtures by means of a positively ignited pre-chamber ignition device which is arranged in the main combustion chamber of an internal combustion engine and which is connected to the main ignition chamber by means of overflow channels which preferably extend tangentially, additional fuel being introduced into the pre-chamber in a valve-controlled manner,
the additional fuel being gaseous and the supply of the additional fuel being carried out by means of a thin capillary-like supply channel (14) with metering using a metering valve (17) which is located with greater spacing relative to the ignition chamber,
**characterised in that** the length L of the supply channel (14) arranged in a supply channel carrier (15) with respect to the diameter D of the supply channel (14), that is to say, L/D, is > 100.

2. Method according to claim 1, **characterised in that** the metering of the fuel is carried out by means of a time-controlled valve, preferably with a valve actuated by an electromagnet.

3. Method according to claim 1, **characterised in that** the length L of the supply channel (14) which is arranged in a supply channel carrier (15) with respect to the diameter D of the supply channel (14), that is to say, L/D, is > 300.

4. Method according to any one of the preceding claims, **characterised in that** the supply channel carrier (15) is arranged substantially transversely relative to the main axis of the substantially cylindrical pre-chamber (7).

5. Method according to any one of the preceding claims, **characterised in that** the metering of the additional fuel is carried out during the compression phase of the internal combustion engine.

6. Method according to claim 5, **characterised in that** an adjustment of the admixture composition at the ignition location is carried out with evaluation of the ion flow path which is measured at the ignition plug.

7. Pre-chamber ignition plug for igniting very weak fuel/air admixtures, in particular of gas engines, having a pre-chamber which surrounds an ignition path and which has overflow channels which lead to the main combustion chamber, with at least one supply hole (13) for gaseous additional fuel being arranged at least in a region of the pre-chamber, (7), the supply of the additional fuel being carried out by means of a thin capillary-like supply channel (14) with metering with a metering valve (17), which is located with greater spacing with respect to the ignition chamber, **characterised in that** the length L of the supply channel (14) which is arranged in a supply channel carrier (15) with respect to the diameter D of the supply channel (14), that is to say, L/D, is > 100.

8. Pre-chamber ignition plug according to claim 7, **characterised in that** at least one supply hole (13) is located in the region of the ignition plug thread.

9. Pre-chamber ignition plug according to claim 7 or 8, **characterised in that** it contains in the outer region of the thread at least one annular channel (12) which is connected to the supply channel (14) and to the pre-chamber (7).

10. Pre-chamber ignition plug according to claims 7 to 9, **characterised in that** a plurality of supply holes (13) are located at the outer periphery of the annular channel (12).

11. Pre-chamber ignition plug according to any one of the preceding claims, **characterised in that** in particular a plurality of visible markings (30) are located on the upper side of the ignition plug (1), an association with the access holes (13) being connected with the markings and it being able to be ensured by means of the markings when the ignition plug is screwed **in that** at least one of the access holes (13) is orientated in alignment with the supply channel (14) for the additional fuel.

12. Pre-chamber ignition plug according to claim 11, **characterised in that**, by rotating the ignition plug using the hexagonal plug type connection (3), a resilient seal (31) is deformed to such an extent that an orientation of the access holes (13) which is intended to be adjusted is achieved in a reliable manner.

13. Pre-chamber ignition plug according to any one of the preceding claims, **characterised in that** it serves to ignite very weak fuel/air admixtures, in particular of gas engines.

## Revendications

1. Procédé permettant l'allumage de mélanges carburant-air très pauvres au moyen d'un dispositif d'allumage à préchambre de combustion avec allumage externe, qui est disposé dans la chambre de combustion principale d'un moteur à combustion interne et qui est relié à la chambre de combustion principale via des canaux de transfert s'étendant de préférence tangentiellement, du carburant supplémentaire étant introduit dans la préchambre de combustion commandée par vanne, le carburant supplémentaire étant sous forme gazeuse et l'admission du carburant supplémentaire s'effectuant par l'intermédiaire d'un mince canal d'alimentation (14) similaire à un tube capillaire, moyennant un dosage par une vanne de dosage (17) située à une plus grande distance de la chambre de combustion,
**caractérisé en ce que** le rapport entre la longueur L du canal d'alimentation (14), disposé dans un support de canal d'alimentation (15), et le diamètre D du canal d'alimentation (14), c'est-à-dire L/D, est supérieur à 100.

2. Procédé selon la revendication 1, **caractérisé en ce que** le dosage du carburant s'effectue au moyen d'une vanne commandée par temporisateur et actionnée de préférence par un électroaimant.

3. Procédé selon la revendication 1, **caractérisé en ce que** le rapport entre la longueur L du canal d'alimentation (14), disposé dans un support de canal d'alimentation (15), et le diamètre D du canal d'alimentation (14), c'est-à-dire L/D, est supérieur à 300.

4. Procédé selon l'une quelconque des revendications précédentes, **caractérisé en ce que** le support de canal d'alimentation (15) est disposé sensiblement transversalement à l'axe principal de la préchambre de combustion (7) sensiblement cylindrique.

5. Procédé selon l'une quelconque des revendications précédentes, **caractérisé en ce que** le dosage du carburant supplémentaire est effectué pendant la phase de compression du moteur à combustion interne.

6. Procédé selon la revendication 5, **caractérisé en ce qu'**un réglage de la composition du mélange est effectué au point d'allumage au moyen de l'analyse de la courbe du flux ionique mesurée sur la bougie d'allumage.

7. Bougie d'allumage avec préchambre de combustion permettant l'allumage de mélanges carburant-air très pauvres, en particulier des moteurs à gaz, comportant une préchambre de combustion qui entoure une voie d'allumage et qui comporte des canaux de transfert menant vers la chambre de combustion principale, au moins une forure d'admission (13) pour le carburant supplémentaire gazeux étant disposée dans au moins une zone de la préchambre de combustion (7), l'admission du carburant supplémentaire s'effectuant par l'intermédiaire d'un mince canal d'alimentation (14) similaire à un tube capillaire, moyennant un dosage par une vanne de dosage (17) située à une plus grande distance de la chambre de combustion,
**caractérisée en ce que** le rapport entre la longueur L du canal d'alimentation (14), disposé dans un support de canal d'alimentation (15), et le diamètre D du canal d'alimentation (14), c'est-à-dire L/D, est supérieur à 100.

8. Bougie d'allumage avec préchambre de combustion selon la revendication 7, **caractérisée en ce qu'**au moins une forure d'admission (13) est située dans la zone du filetage de la bougie d'allumage.

9. Bougie d'allumage avec préchambre de combustion selon la revendication 7 ou 8, **caractérisée en ce que** celle-ci contient, dans la zone extérieure du filetage, au moins un canal annulaire (12) qui communique avec le canal d'alimentation (14) et avec la préchambre de combustion (7).

10. Bougie d'allumage avec préchambre de combustion selon l'une quelconque des revendications 7 à 9, **caractérisée en ce que** plusieurs forures d'admission (13) sont disposées sur la périphérie extérieure du canal annulaire (12).

11. Bougie d'allumage avec préchambre de combustion selon l'une quelconque des revendications précédentes, **caractérisée en ce qu'**en particulier plusieurs marquages (30) visibles sont disposés sur la face supérieure de la bougie d'allumage (1), une association avec les forures d'admission (13) étant liée aux marquages, et lesdits marquages permettant, au moment du vissage de la bougie d'allumage, de garantir qu'au moins une des forures d'admission (13) est alignée avec le canal d'alimentation (14) pour le carburant supplémentaire.

12. Bougie d'allumage avec préchambre de combustion selon la revendication 11, **caractérisée en ce que** sous l'effet de la rotation de la bougie d'allumage au moyen du raccord à six pans (3), un joint d'étanchéité (31) élastique est déformé à tel point qu'une orientation à définir des forures d'admission (13) est obtenue de manière sûre.

13. Bougie d'allumage avec préchambre de combustion selon l'une quelconque des revendications précédentes, **caractérisée en ce que** celle-ci est destinée à l'allumage de mélanges carburant-air très pauvres, en particulier des moteurs à gaz.
